**Europäisches Patentamt**

**European Patent Office**

**Office européen des brevets**

(11) Veröffentlichungsnummer: **0 303 728 B1**

## (12) EUROPÄISCHE PATENTSCHRIFT

(45) Veröffentlichungstag der Patentschrift: **11.09.91**

(51) Int. Cl.5: **B30B 11/24**, B29C 47/66

(21) Anmeldenummer: **87112120.8**

(22) Anmeldetag: **21.08.87**

(54) **Vorrichtung zum Extrudieren, Expandieren und/oder thermischen Behandeln von Stoffen und Stoffgemischen.**

(43) Veröffentlichungstag der Anmeldung:
**22.02.89 Patentblatt 89/08**

(45) Bekanntmachung des Hinweises auf die
Patenterteilung:
**11.09.91 Patentblatt 91/37**

(84) Benannte Vertragsstaaten:
**BE DE FR GB IT NL SE**

(56) Entgegenhaltungen:
**DE-A- 2 230 530**       **DE-A- 3 150 766**
**DE-A- 3 613 612**       **DE-B- 1 201 041**
**DE-B- 2 335 385**       **FR-A- 2 197 635**
**GB-A- 2 059 864**       **US-A- 3 169 752**
**US-A- 4 155 690**       **US-A- 4 538 917**
**US-A- 4 657 499**

(73) Patentinhaber: **Schumacher, Walter Dr. Ing.**
**Kirchgasse 3**
**W-3344 Ohrum(DE)**

(72) Erfinder: **Schumacher, Heinz**
**verstorben**
**(DE)**

(74) Vertreter: **DIEHL GLAESER HILTL & PARTNER**
**Patentanwälte Königstrasse 28**
**W-2000 Hamburg 50(DE)**

## Beschreibung

Die Erfindung betrifft die Verbesserung der verfahrenstechnischen Wirkung und Anwendbarkeit sogenannter Extruder, Expander oder ähnlicher Vorrichtungen zur insbesondere thermischen Behandlung von Stoffen und Stoffgemischen, bevorzugt aus dem Bereich der Lebensmittel-, Futtermittel- und Düngemittel-Industrie. Die Erfindung ist aber auch in gleichem Maße in der pharmazeutischen Technologie sowie zur Herstellung und Verarbeitung von Kunststoffprodukten von Vorteil.

Dabei werden Einzelprodukte und Verbindungen, aber auch Stoffgemische einer Reaktion oder einem Umsatz unter gegegebenen Verfahrensparametern wie Verweilzeit, Temperatur, Druck, Massenverhältnisse usw. unterworfen und anschließend, ggf.auch bei gleichzeitiger Entspannung und/oder Formgebung aus dem kontinuierlich arbeitenden System ausgestoßen.

Zur kontinuierlichen Materialförderung durch die Reaktions- oder Umsatzzone (Behandlungszone) werden bevorzugt, wenn nicht sogar ausschließlich, Schneckenelemente, auch Doppel-oder Mehrfachschnecken, benutzt, die in einem geschlossenen System horizontal angeordnet sind und deren Gänge sich innerhalb des Systems (Extruder etc.) verändern können, um unterschiedlichen Materialtransport, unterschiedliche Verweilzeiten sowie insgesamt veränderliche und differenzierte Reaktionsbedingungen einstellen zu können.

Es ist bekannt, zur Materialauflockerung beim kontinuierlichen Materialdurchsatz in das Schneckenvolumen sogenannte Absteiffinger oder Brecherstangen einzubauen, die radial von der Innenseite des Schneckengehäuses (Mantel) in Richtung der Schneckenwelle orientiert sind. Derartige Abstreiffinger haben die Aufgabe, weiches oder halbplastisches, aber auch zusammenbackendes Gut beim kontinuierlichen Durchsatz durch die Behandlungszone ständig aufzulockern oder aufzureißen, damit eine optimale Erneuerung der Oberfläche gewährleistet und damit der Behandlungsprozess im Sinne der gestellten Aufgabe durchgeführt wird.

Diese Auflockerung des Materials bei gleichzeitiger Erneuerung der Oberfläche ist insbesondere dann erforderlich, wenn das Material oder Gut zum Zusammenbacken oder Verkleben neigt, so daß durch Ausbildung eines Wulstes nur noch eine reine Produktförderung durch den Schneckenraum stattfindet, der gewünschte Umsatz, d.h. Vermischen, Reagieren, Homogenisieren, Behandeln usw., jedoch ausbleibt.

Durch den Einsatz der Abstreiffinger bzw. Brecherstangen wird weitgehend sichergestellt, daß - in Abhängigkeit von den Materialeigenschaften wie Viskosität, Härte, Fließfähigkeit usw., aber auch von den weiteren Verfahrensparametern - die vorstehenden Mängel im wesentlichen beseitigt, zumindest aber ihnen entgegengewirkt wird.

Die Gefahr der Ausbildung von Verklebungen, plastischer oder halbplastischer Klumpen, Wülsten usw. während des Durchgangs durch die Behandlungszone (Extruder, Expander usw.) ist immer dann gegeben, wenn das Gut oder Materialgemisch z.B. einen Aggregatzustandswechsel (Schmelze, Kondensation, Verfestigung usw.) durchläuft, oder wenn in lösemittelhaltiger oder wasserfeuchter Atmosphäre gearbeitet wird oder wenn Viskositätsveränderungen als Folge der Reaktion eintreten. Dies ist u.a. der Fall, wenn beispielsweise bei der Verarbeitung von Lebensmitteln wie Teig- und Fleischwaren rheologische Materialänderungen eintreten, oder wenn Futtermittel, öl- oder fetthaltige Produkte bei Temperaturen extrudiert werden, die im Bereich der Materialschmelze oder Sättigung liegen, so daß ein Verklumpen oder Verkleben des Guts oder Materialgemischs kaum zu vermeiden ist.

Nur beispielhaft sei hier als besonders markant die sogenannte thermische Konditionierung von Ölsaaten und Ölfrüchten zur Vorbereitung auf die Lösungsmittelextraktion erwähnt. Bei dieser Behandlung im kontinuierlichen Betrieb werden die leicht plastifizierbaren Naturprodukte wie Sojabohnen und andere in wasserhaltiger Atmosphäre schnell zusammengepresst, kompaktiert und dadurch nur noch als Wulst transportiert, ohne daß der gewünschte Einfluß von Temperatur und Feuchtigkeit optimal zur Geltung kommt. Ähnliche Beobachtungen werden bei der Verarbeitung von Futtermittelgemischen, von stärkehaltigem Material oder von Düngemittelansätzen beobachtet, wobei speziell bei protein- und stärkehaltigen Produkten - wenn in feuchter Atmosphäre gearbeitet wird - Materialverschmierungen zusätzliche Probleme aufbauen.

Um die für einen optimalen Materialumsatz erforderliche, ständige Erneuerung der Materialoberfläche während des Transports durch die Behandlungszone (Schneckenvolumen des Extruders, Expanders usw.) zu gewährleisten und gleichzeitig der Ausbildung von Verschmierungen, Verklebungen, Wulstbildung usw. entgegenzuwirken, wurde - wie eingangs bereits erwähnt - vorgeschlagen, in das Schneckenvolumen bzw. in die Behandlungszone Abstreiffinger oder Brecherstangen einzubauen. Diese sind auf der Innenwand des Mantels der Vorrichtung (Expander usw.) starr befestigt und in Richtung der Schneckenwelle radial orientiert. Dabei handelt es sich um stangenartige Vollkörper (Finger), die kreisrunde Querschnittsfläche aufweisen und ggf. zentrale Bohrungen besitzen (vgl. DE 23 35 385 bzw. US 3 255 220).

Nachteilig erweist sich bei derartigen Abstreiffingern die starre Anordnung bzw. Befestigung, die eine Veränderung des Transportwegs des zu behandelnden Materials im laufenden Betrieb oder auch bei Betriebsunterbrechungen nicht zuläßt; die ungünstige Konfiguration bzw. Habitus, die nur eine laminare Strömung des Guts um die Stangen bzw. Stifte erlaubt, sowie die große Masse der Stangen oder Stifte, die - zumal dieselben starr angeordnet sind - eine extrem hohe Antriebsleistung des Schneckenmotors erfordert

Die DE-A-3 613 612 beschreibt eine Turbo-Mischstrangpresse für Kautschuk-Kunststoffe, die auch zum Expandieren und Extrudieren verwendet werden kann. Diese Mischstrangpresse mit zylindrischem Hohlkörper und eingelagerter Förderschnecke weist sogenannte Schaufeln oder Leitschaufeln auf, die im Abstand über die Länge der Vorrichtung verteilt sein können, und die an der Wand des zylindrischen Hohlkörpers drehbar befestigt sind. Die Drehung kann von außen erfolgen. Die Schaufeln von geringer Länge tauchen nur bedingt in die Kunststoffmasse (Kunststoffschmelze) ein. Sie sind in sogenannten Büchsen gelagert und werden von Schäften getragen.

Die DE-A-2 230 530 hat eine Plastifizierschnecke für Kunststoffschmelzen zum Gegenstand, in deren Wänden Zugabevorrichtungen, insbesondere Düsen, für die Einspritzung von Treibgas in den Schneckenraum eingelassen sind. Diese Düsen enden entweder mit der Schneckenwand oder wenig darunter und sollen das Treibgas in einen extra hierfür ausgebildeten freien Raum im Bereich der Schneckenwelle einbringen.

Ein ständig sich widerholender Mischeffekt, ständige Erneuerung der Gutoberfläche, Materialauflockerung, Materialzerkleinerung oder Krümmelbildung, die Vermeidung der Ausbildung von nur noch transportierten Klumpen oder Wülsten, insbesondere wenn in feuchter Atmosphäre oder im Temperaturbereich von Phasenübergängen gearbeitet wird, ist mit den bekannten Vorrichtungen nur bedingt möglich.

Es ist Aufgabe der Erfindung, die Abstreiffinger in ihrer Formgebung zu verbessern und damit die Energieausbeute des Schneckensystems in Extrudern, Expandern oder ähnlichen Einrichtungen insgesamt zu verbessern.
Weiter soll der Mischeffekt im Schneckenraum gesteigert und damit die jeweils ablaufende Reaktion optimiert werden.
Schließlich soll erreicht werden, daß in Abhängigkeit von den chemischen und rheologischen Eigenschaften des zu behandelnden Materials die Positionierung der Abstreiffinger im laufenden Betrieb variiert werden kann, wodurch beeinflußbare Mischeffekte, Turbulenzen, Richtungsänderungen des Materials usw. eingestellt werden können.

Diese Aufgabe wird erfindungsgemäß dadurch gelöst,

(a) daß die Abstreiffinger aus zylinderförmigen Stiftkörpern bestehen, die in Richtung zur Schneckenwelle bis nahe der der Schneckenwelle gegenüberliegenden Erdfläche abgeflacht oder teilweise ausgenommen sind,

(b) daß die Abflachungen oder Ausnehmungen bis zu 85%, insbesondere insbesondere zwischen 45 und 70% der Querschnittsfläche der zylinderförmigen Stiftkörper betragen,

(c) daß die zylinderförmigen Stiftkörper mindestens eine zentrale Bohrung und von dieser abgehend mindestens eine Seitenbohrung mit Austritt in den Schneckenraum aufweisen und

(d) daß die zylinderförmigen Stiftkörper um ihre Vertikalachse drehbar gehalten sind.

Die zylinderförmigen Stiftkörper besitzen bevorzugt eine kreisförmige Querschnittsfläche. Sie können aber auch mehreckige oder ellipsenförmige Querschnittsfläche aufweisen.

Die Abflachungen oder Ausnehmungen verlaufen vorwiegend glatt bis zur Endfläche der Stiftkörper. Sie können aber auch asymptotische Annäherung an die Endfläche der Stiftkörper aufweisen, wobei sich der Grad der Abflachung bis zur Endfläche erhöht. Auch können die Ausnehmungen so gestaltet sein, daß sichelförmige Körper gebildet werden, deren größte Fläche dem geförderten Material entgegensteht. Aus Gründen der Stabilität und Unterbringung der Bohrungen sollte die Ausnehmung nicht mehr als 85% der Gesamt-Querschnittsfläche betragen. Nach unten bestehen praktisch keine Grenzen, doch geht dies auf Kosten des zunehmenden Gewichts der Stiftkörper.

Zwecks Einleitung eines Fluids während des Betriebs ist eine senkrechte Bohrung vorgesehen, die in bevorzugt horizontale Seitenbohrungen einmündet. Die Zahl der Seitenbohrungen ist beliebig. Die Richtung der Seitenbohrungen kann über den gesamten Umfang der Stiftkörper und über deren gesamte Höhe bzw. Länge verteilt sein. Bevorzugt sind sie jedoch so angeordnet, daß sie gegen die Förderrichtung des Materials angeordnet sind.

Die zylinderförmigen Stiftkörper sind derart am oder im Mantel des Schneckenraums (Extruderwand) gehalten, daß sie - von außerhalb der Extruderwand - um ihre Achse verdreht werden können. Hierdurch gelingt es, ohne Betriebsunterbrechung sowohl die Einführrichtung von Fluiden - durch die Horizontalbohrungen - zu variieren, als auch die dem geförderten Material gegenüberstehende Oberfläche der Stiftkörper zu verändern.

Es hat sich weiter als zweckmäßig erwiesen, wenn die im Sinne der Erfidung mit Abflachungen oder Ausnehmungen versehenen Stiftkörper zusätzlich in sich verdrallt sind. Hierdurch ergeben sich besonders wirksame Turbulenzen, die den angestrebten Misch- und Auflockerungseffekt weiter steigern.

Weitere Einzelheiten, Konstruktionsmerkmale und besonders vorteilhafte Ausführungsformen der erfindungsgemäßen Abstreiffinger in Vorrichtungen zum Extrudieren, Expandieren und/oder thermischen Behandeln von Stoffen und Stoffgemischen ergeben sich aus den anliegenden Figuren.

Es zeigen:

Fig.1a in Aufriss und Querschnitt die einfachste Form der erfindungsgemäßen Abstreiffinger;

Fig.1b den Abstreiffinger nach Fig.1a mit Blick auf die abgeflachte abgeflachte bzw. ausgenommene Fläche;

Fig.1c den Querschnittsverlauf nach zusätzlicher Verdrallung;

Fig.2 die Positionierung der Abstreiffinger im Arbeitsraum eines Schneckensystems;

Fig.3 im Beispiel die Verdrehung der Abstreiffinger um die eigene eigene Achse;

Fig.4 den Grad der Verdrehung, gegeben durch den Winkel (alpha);

Fig.5 den Schnitt (A-A) von Fig.4 bei dreifacher Stiftreihenanordnung.

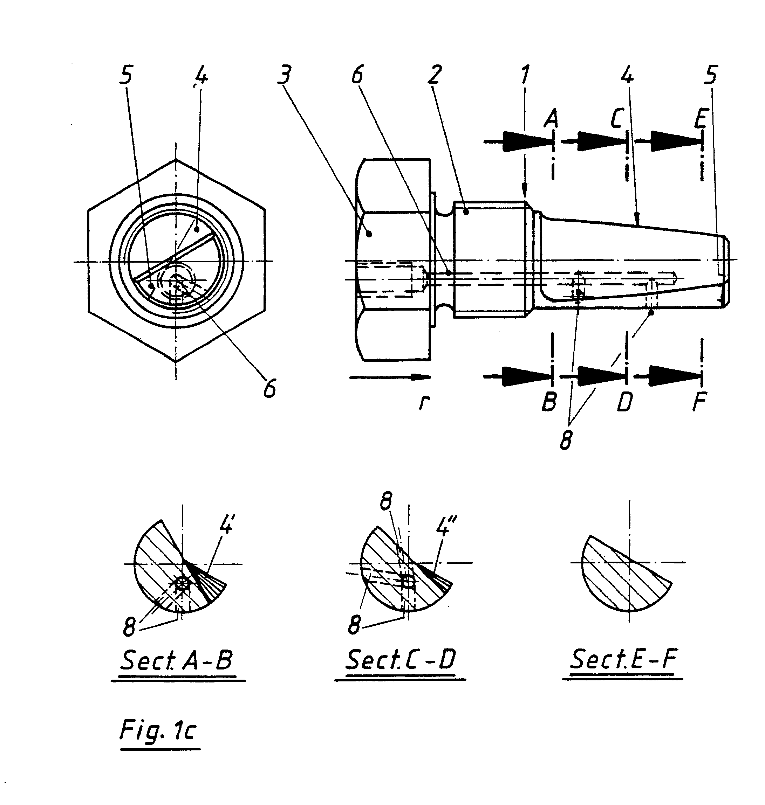

Wie aus Fig.1a hervorgeht, besteht der Abstreiffinger oder zylindrische Stiftkörper (1) aus dem den vollen Flächenquerschnitt einnehmenden oberen Teil (1') und dem in Richtung der Bodenfläche (5) ausgenommenen bzw. abgeflachten Teil (4) mit Ausnehmung (4'). Im dargestellten Beispiel hat der Stiftkörper zunächst vollkreisrunden Habitus (1'), der bei (1") in den verbleibenden Teil (4) mit kreisabschnittförmiger Querschnittsfläche übergeht.

Über geeignete Hilfsmittel wie z.B. Rohrgewinde (2) und Mutter oder Schraube (3) ist der Stiftkörper am oder im Mantel des Schneckenraums gehalten. Über eine Bohrung (6), die bevorzugt durchgehend bis nahe Unterkante des Stiftkörpers reicht, kann ein Fluid, z.B. Wasserdampf oder auch ein Gas wie $CO_2$ Luft, Sauerstoff usw. eingeleitet werden. Über vorwiegend horizontale Seitenbohrungen (8) wird dieses Fluid in verschiedene Richtung innerhalb des Schneckenraums verteilt bzw. in das zu bearbeitende Material eingeführt. Mit (r) ist die radiale Ausrichtung des Abstreiffingers von der Wand des Schneckenraums zur Welle der Schnecke bezeichnet.

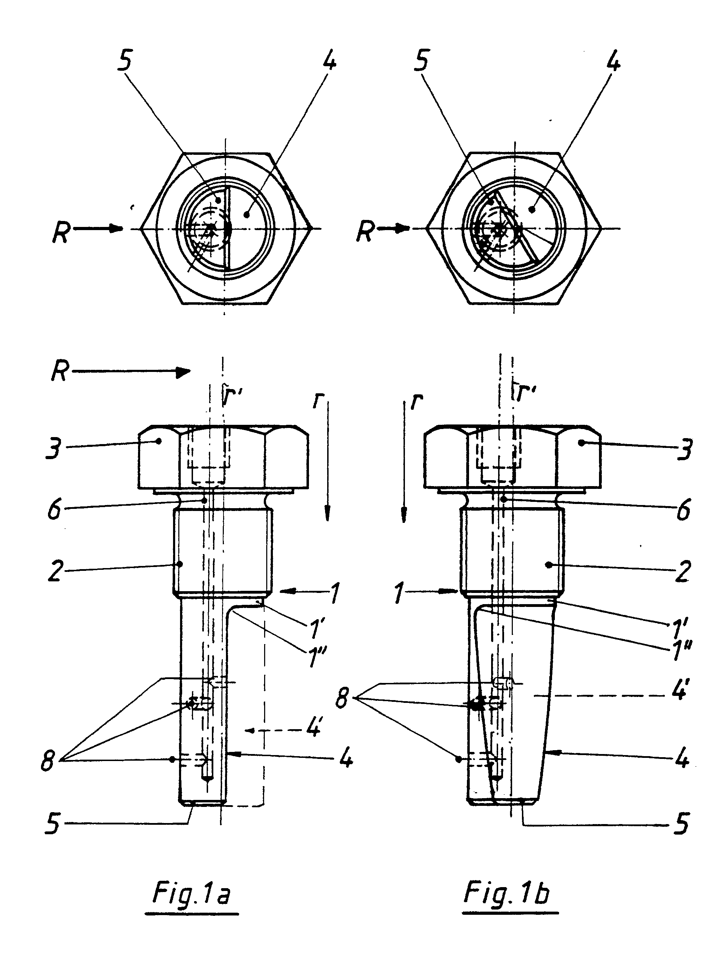

Fig.1b zeigt den gleichen Abstreiffinger bzw. Stiftkörper (1) nach Drehung um die Achse (r'). Der ausgenommene bzw. abgeflachte Teil (4') von (1) ist deutlich zu erkennen. Da die größte verbleibende Oberfläche des Stiftkörpers (1) in der Grundstellung senkrecht zur Förderrichtung (R) des zu behandelnden Materials steht, wird durch die Verdrehung die dem Material angebotene Fläche verkleinert, wodurch sich unterschiedliche Turbulenzen an den Randbereichen bzw. beim Übergang vom runden zum abgeflachten Querschnitt ausbilden.

Die Stiftkörper können, wie Fig.1c zeigt, zusätzlich in sich verdrallt sein. Diese Verdrallung hat eine weitere Erhöhung der Vermischung, Oberflächenerneuerung und Turbulenz des Materials zur Folge. Die Verdrallung erfolgt bevorzugt asymptotisch und hat im oberen Bereich (Schnitt A-B) einen höchsten Wert (4"). Dieser fällt in Richtung der Endfläche (5) ab (vgl. Schnitt C-D und Position (4"')) und geht bei dieser Endfläche (5) in eine der Fig.1b gleiche Endkonfiguation über (Schnitt E-F).

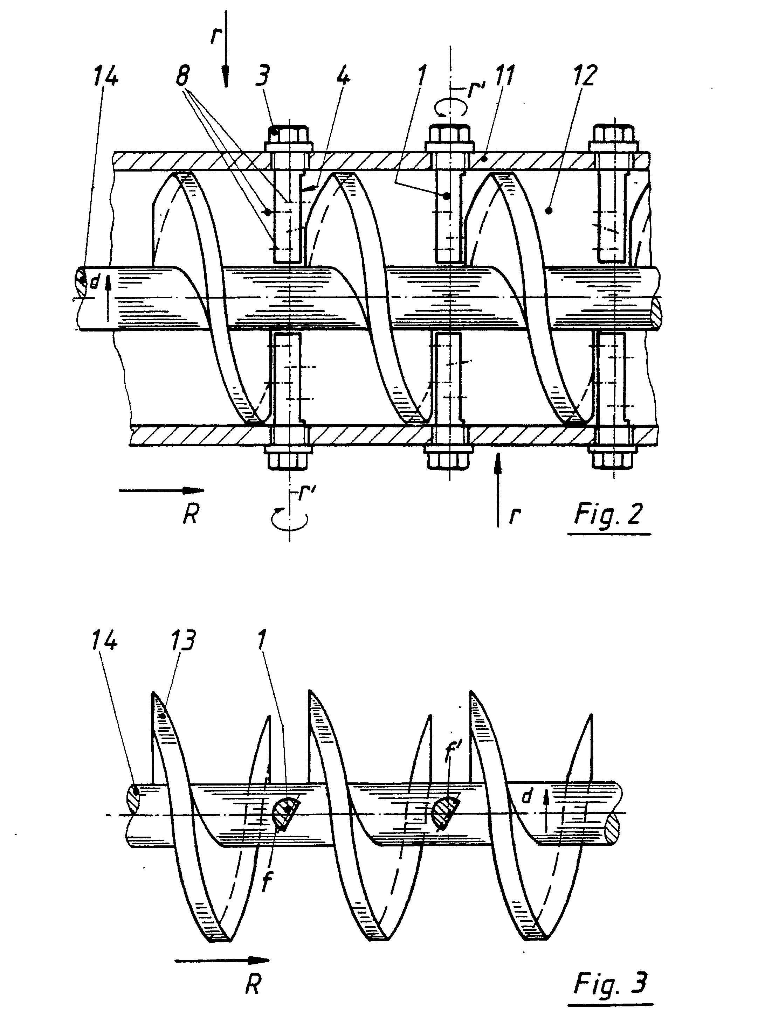

Wie aus Fig.2 hervorgeht, sind die Abstreiffinger (1) in die Wand (11) eines Extruders oder Expanders bzw. Schneckenkörpers so eingelassen, daß sie über geeignete Mittel von außerhalb der Wand (Mantel) (11) verdreht werden können. Die hierzu benötigten Mittel sind nicht Gegenstand der Erfindung (Hebel, Schlüssel, Griffe usw.), da sie zum allgemeinen Rüstzeug des Verfahrenstechnikers gehören. In der Grundposition ist die nicht abgeflachte Seite des Fingers (1) dem in Richtung (R) geförderten Material entgegengestellt. Zwecks Materialförderung dreht sich die Schnecke (13) - vgl. Fig.3 - mit der Welle (14) im Schneckenraum (12) gemäß (d). Die Finger (1) stehen senkrecht bzw. radial (r) zur Welle (14). Im Bereich der Finger (1) ist die Schnecke (13) unterbrochen. Wie ersichtlich, können die Seitenbohrungen (8) für ein Fluid nach allen Richtungen, auch schräg abfallend oder ansteigend, verlaufen, sie sind jedoch bevorzugt in Richtung des Guttransports (R) orientiert.

Die Möglichkeit der Positionsveränderung der Abstreiffinger (1) zur Richtung (R) des geförderten Guts durch Einstellung von außerhalb des Mantels (11) der Vorrichtung zeigt Fig.3. Der dargestellte Schnitt der Finger (1) läßt erkennen, daß dem Gut unterschiedliche Fingerflächen angeboten werden, von denen die in der Tafelebene untere Partie (f) kleiner ist als die vergleichsweise obere Partie (f'). Natürlich ist die Verdrehung auch in umgekehrter Richtung möglich.

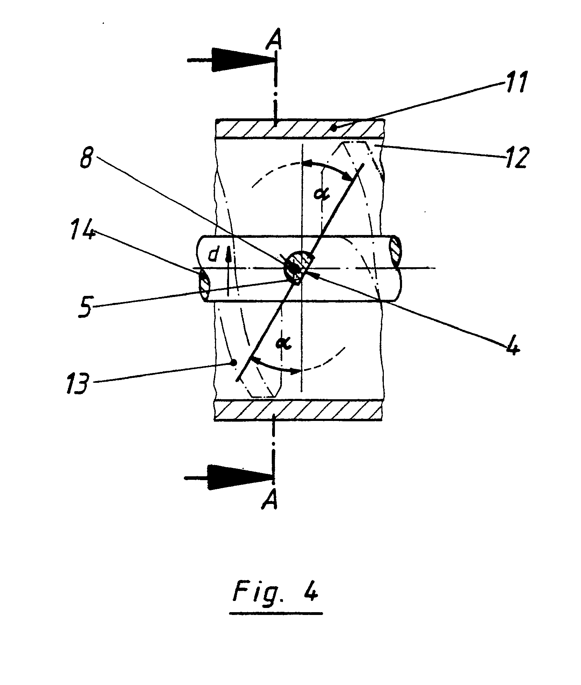

Der Drehwinkel (alpha) der Drehachse (r') - vgl. Fig.1a und 1b - ist innerhalb eines großen Bereichs variabel. Theoretisch, jedoch für die Praxis ohne Bedeutung, kann er um 360° verändert werden. Im praktischen Betrieb beträgt er max. 45°, das ist die Abweichung von der normalen radialen Stellung der Finger (1) zur Schneckenwelle (14). Bevorzugt wird der Winkel (alpha) zwischen 20 und 40° gehalten, wobei natürlich die Eigenschaften des zu behandelnden Materials, die gegebene Aufgabenstellung (Reagieren, Mischen, Zerkleinern usw.) für den Winkelgrad verantwortlich ist (vgl. Fig.4).

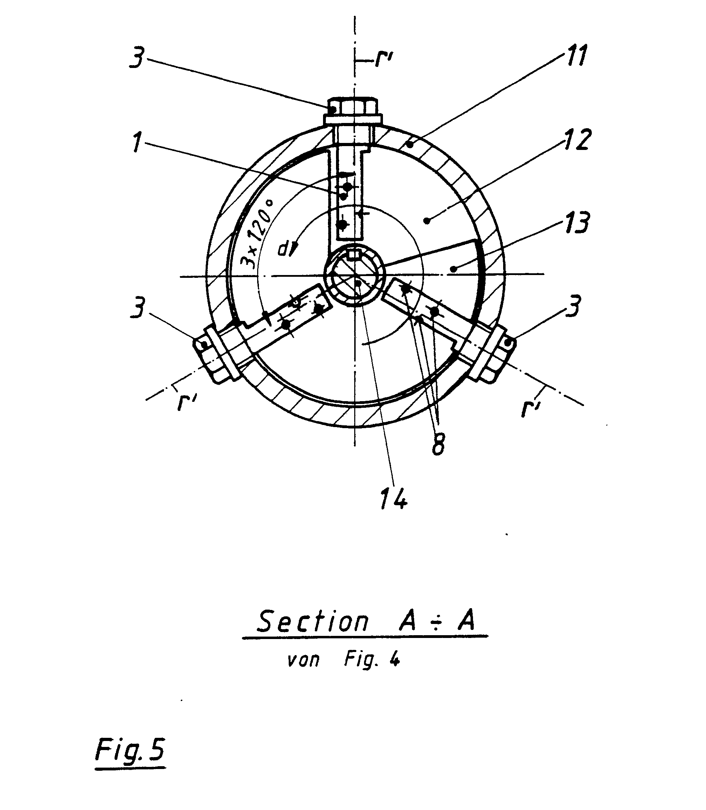

Es hat sich im laufenden Betrieb als besonders vorteilhaft gezeigt, wenn mehrere Reihen Abstreiffinger (1), z.B. drei Reihen gemäß Fig.5, vorhanden sind und die Finger (1) symmetrisch gegenüberstehen. Dabei kann die Positionierung der Finger (1) sowohl innerhalb einer Reihe als auch zueinander unterschiedliche (Alpha)-Werte aufweisen, d.h. die einzelnen Finger sind verschieden verdreht. Dadurch wird der Materialfluß unterschiedlich beeinflußt, und es werden gegeneinander gerichtete Mischungszonen gebildet, die bei unterschiedlicher Turbulenz eine weitere Steigerung der Verfahrensökonomie zur Folge haben. Auch können Zonen mit einer vermehrten Anzahl von Fingern (1) vorhanden sein. Dies gilt vor allem dann, wenn z.B. gegen Ende der Behandlung die Gefahr der Materialverklumpung größer ist. Hier werden dann mehrere Abstreiffinger auf kleinem Raum eingesetzt. Entsprechendes gilt auch für die unterschiedliche Verdrehung, d.h. unterschiedlichem Winkel (alpha) innerhalb einer Reihe oder innerhalb einer Zone.

Es versteht sich, daß die Konfiguration der abgeflachten oder mit Ausnehmungen versehenen Abstreiffinger sowie evtl. zusätzlicher Verdrallung gemäß Fig.1c nicht an die beispielhaften Darstellungen der Figuren gebunden ist, sofern das Grundprinzip der Erfindung, nämlich Abflachung bzw. Ausnehmung, ggf. Verdrallung, Position der Verdrehung in Richtung zum Materialfluß (R), Verdrehbarkeit der Finger von außerhalb des Behandlungsraums im laufenden Betrieb, Bohrungen für Fluide usw. nicht verlassen wird.

Die erfindungsgemäße Vorrichtung hat sich bisher in ganz besonderer Weise bei der thermischen Konditionierung von Ölsaaten, bei der Behandlung, Umsetzung und Formgebung von Lebensmitteln, Futtermitteln oder auch Düngemitteln bewährt. Dabei erwiesen sich die erfindungsgemäßen Maßnahmen insbesondere für den laufenden Betrieb als besonders wirtschaftlich (Betriebskosten durch Verminderung der Antriebsenergie, Qualitätsverbesserung durch optimale Materialdurchmischung und Reaktion der Komponenten, Einheitlichkeit der Produkte sowie Standzeit der Anlage usw.).

**Patentansprüche**

1. Vorrichtung zum Extrudieren, Expandieren und/oder thermischen Behandeln von Lebensmitteln, Futtermitteln, Düngemitteln oder Ölsaaten und Ölfrüchten, wobei das zu behandelnde Material oder Gemisch in einem mit einer Förderschnecke ausgestatteten, geschlossenen System kontinuierlich vom Eingang in das System bis zum Austritt gefördert und dabei unter den vorgesehenen Verfahrensbedingungen wie Verweilzeit, Druck, Temperatur, Reaktionskomponenten, Zusatzstoffen usw. behandelt wird; zwecks Durchführung von Reaktionen, Umsetzungen oder auch nur Vermischungen Zuführorgane für Fluide vorgesehen sind; und sogenannte Abstreiffinger (1) vorhanden sind, deren Anstellwinkel ($\alpha$) von außen veränderbar ist und die das Material oder Gemisch im Verlaufe des Durchgangs durch das System auflockern und dieserhalb senkrecht von ihrer Befestigung an der Innenwand der Vorrichtung bis in die Nähe der Schnecken-Drehwelle (14) reichen, dadurch gekennzeichnet, daß die Abstreiffinger (1) als zylinderförmige Stiftkörper ausgebildet sind, die in Richtung zur Schneckenwelle (14) Abflachungen oder Ausnehmungen (4') bis zur Endfläche (5) aufweisen; daß die Abstreiffinger (1) mindestens eine Zentralbohrung (6) besitzen; daß von der Zentralbohrung (6) Seitenbohrungen (8) ausgehen, die horizontal, ansteigend oder abfallend verlaufen; und daß die Abflachungen oder Ausnehmungen (4') max. 85%, insbesondere zwischen 45% und 70% der Querschnittsfläche der Abstreiffinger betragen.

2. Vorrichtung nach Anspruch 1, dadurch gekennzeichnet, daß die Abstreiffinger (1) zusätzlich in sich verdrallt oder verdreht sind (4").

3. Vorrichtung nach Anspruch 1 oder 2, dadurch gekennzeichnet, daß der Anstellwinkel (alpha) der Abstreiffinger (1), der von außen veränderbar ist, 45°, insbesondere zwischen 20 und 40° beträgt.

4. Vorrichtung nach Ansprüchen 1 - 3, dadurch gekennzeichnet, daß die Abstreiffinger kreisrunde, vieleckige, ellipsoide oder sichelförmige Schnittfläche (1') aufweisen.

5. Vorrichtung nach Anspruch 4, dadurch gekennzeichnet, daß eine oder mehrere Reihen Von Abstreiffingern (1) entlang der Schnekkenwelle vorgesehen sind, von denen die einzelnen Abstreiffinger (1) gleichen oder unterschiedlichen Anstellwinkel (Drehwinkel alpha) aufweisen.

6. Vorrichtung nach Anspruch 5, dadurch gekennzeichnet, daß Bereiche mit unterschiedlicher Anzahl von Abstreiffingern (1) vorgesehen sind.

**Claims**

1. Apparatus for extruding, expanding and/or thermally processing food, feeding stuff, fertilizers or oil-bearing seeds and oleaginous fruits, the material or mixture to be treated being conveyed continuously in a closed system equipped with a worm conveyor from the entrance of the system to the discharge while being treated under the process conditions provided for like residence time, pressure, temperature, reaction components, additives a.s.o.; supply elements for fluids being provided for performing the reactions, conversions or only blendings,; and so-called stripping fingers (1) being present, the angles of incidence ($\alpha$) of which can be changed from outside, for loosening the material or mixture in the course of its travel through the system and which therefor reach vertically from their attachment to the inside wall of the apparatus to the vicinity of the worm rotation shaft (14), characterized in that the stripping fingers (1) are cylinder-shaped pin bodies with flattenings or recesses (4') reaching to the end surface (5), in the direction of the worm shaft (14); that the stripping fingers (1) have at least one central bore (6); that side bores (8) extend from the central bore (6) in horizontal, ascending or descending direction; and that the flattenings or recesses (4') amount to a maximum of 85 %, in particular between 45 % and 70 % of the cross sectional area of the stripping fingers.

2. Apparatus according to claim 1, characterized in that the stripping fingers (1) are additionally twisted or wrenched in themselves (4").

3. Apparatus according to claim 1 or 2, characterized in that the angle of incidence (alpha) of the stripping fingers (1), which can be changed from outside, is 45°, in particular between 20 and 40°.

4. Apparatus according to claims 1 to 3, characterized in that the stripping fingers exhibit a circular, polygonal, ellipsoidal or sickle-shaped cross-sectional area (1').

5. Apparatus according to claim 4, characterized in that there is provided one or a plurality of rows of stripping fingers (1) along the worm shaft, the individual stripping fingers have equal or different angles of incidence (angle of rotation alpha).

6. Apparatus according to claim 5, characterized in that there are provided regions comprising different numbers of stripping fingers (1).

## Revendications

1. Dispositif pour extruder, expanser et/ou traiter thermiquement des denrées alimentaires, des aliments pour bétail, des engrais, ou des graines oléagineuses et des fruits oléagineux, dans lequel la matière, ou mélange, à traiter est transportée en continu dans un système fermé et pourvu d'une vis sans fin, de l'entrée du système jusqu'à la sortie, et y est traité, dans les conditions opératoires prévues, comme le temps de séjour, la pression, la température, les composants de réaction, les additifs, etc..., dans lequel des éléments d'amenée de fluides sont prévus pour réaliser des réactions, des transformations ou seulement des mélanges, et dans lequel sont prévus des doigts dits de raclage (1) dont l'angle d'inclinaison ($\alpha$) peut être modifié de l'extérieur, qui ramollissent la matière ou le mélange pendant son passage à travers le système, et que, partant de leur point de fixation sur la paroi interne du dispositif, s'étendent perpendiculairement à celle-ci jusqu'à proximité de l'arbre rotatif (14) de la vis sans fin, caractérisé en ce que les doigts de raclage (1) sont réalisés sous forme de tiges cylindriques qui présentent, en direction de l'arbre (14) de la vis sans fin, des aplatissements ou des évidements (4') allant jusqu'à leur face terminale (5), que les doigts de raclage (1) possèdent au moins un trou central (6), que des trous latéraux (8) partent du trou central (6) selon une orientation horizontale, ascendante ou descendante, et que les aplatissements ou évidements (4') représentent au maximum 85 %, en particulier de 45 % à 70 %, de l'aire de la section des doigts de raclage.

2. Dispositif selon la revendication 1, caractérisé en ce que les doigts de raclage (1) sont en outre torsadés (4") sur eux-mêmes.

3. Dispositif selon la revendication 1 ou 2, caractérisé en ce que l'angle d'inclinaison (alpha) des doigts de raclage (1), qu'on peut modifier de l'extérieur, est au maximum de 45°, et compris plus particulièrement entre 20 et 40°.

4. Dispositif selon l'une des revendications 1 à 3, caractérisé en ce que les doigts de raclage (1) présentent des surfaces de coupe (1') circulaires, polygonales, ellipsoïdales ou en forme de croissant.

5. Dispositif selon la revendication 4, caractérisé en ce qu'il est prévu, le long de l'arbre de la vis sans fin, une ou plusieurs rangées de doigts de raclage (1), dont les doigts de raclage (1) individuels présentent un angle d'inclinaison (angle de rotation alpha) identique ou différent.

6. Dispositif selon la revendication 5, caractérisé en ce qu'il est prévu des zones comportant un nombre de doigts de raclage (1) différent.

Fig.1a          Fig.1b

Sect. A-B  Sect. C-D  Sect. E-F

Fig. 1c

*Fig. 2*

*Fig. 3*

*Fig. 4*

**Section A ÷ A**

von  Fig. 4

**Fig. 5**